# EUROPÄISCHE PATENTSCHRIFT

(11) **EP 3 808 632 B1**
(45) Veröffentlichungstag und Bekanntmachung des Hinweises auf die Patenterteilung: **23.02.2022**
(21) Anmeldenummer: 20200071.7
(22) Anmeldetag: 05.10.2020
(51) Int. Cl.: B62D 5/07

(54) **SELBSTFAHRENDE BAUMASCHINE**
SELF- PROPELLED CONSTRUCTION MACHINE
MACHINE DE CONSTRUCTION AUTOMOTRICE

(30) Priorität: 15.10.2019 DE 102019127735
(43) Veröffentlichungstag der Anmeldung: 21.04.2021
(73) Patentinhaber: Wirtgen GmbH, 53578 Windhagen (DE)
(72) Erfinder: Frank, Burkhard, 53560 Vettelschoß (DE)
(74) Vertreter: Oppermann, Frank

(56) Entgegenhaltungen:
- EP-A2- 0 251 290
- DE-A1- 2 445 624
- DE-A1- 3 545 046
- DE-A1- 4 340 873
- DE-A1- 10 315 494
- DE-B3-102017 117 149

## Beschreibung

Die Erfindung betrifft eine selbstfahrende Baumaschine, insbesondere Straßenfräsmaschine, Stabilisierer, Recycler oder Surface-Miner. Diese Baumaschinen verfügen über eine rotierende Arbeitswalze, bei der es sich um eine Fräs- oder Schneidwalze handeln kann. Mit der Arbeitswalze können beispielsweise schadhafte Straßenschichten abgetragen, bestehende Straßenbeläge wiederaufbereitet, das Gelände für den Straßenbau vorbereitet oder Bodenschätze abgebaut werden. Ein Beispiel des Standes der Technik ist in Dokument DE 35 45 046 A1 offenbart.

Selbstfahrende Baumaschinen weisen einen Maschinenrahmen auf, der von einem Fahrwerk getragen wird, das mehrere Laufwerke, beispielsweise Kettenlaufwerke oder Räder, umfasst. Es sind Baumaschinen mit in Arbeitsrichtung vorderen, linken und rechten Laufwerken und hinteren, linken und rechten Laufwerken bekannt. Die Baumaschinen können aber auch nur ein vorderes und ein linkes und ein rechtes hinteres Laufwerk aufweisen. Bei den Baumaschinen ist mindestens eines der Laufwerke ein lenkbares Laufwerk. Beispielsweise ist bei einer Kleinfräse, die ein vorderes Laufwerk und zwei hintere Laufwerke aufweist, das vordere Laufwerk ein lenkbares Laufwerk.

Zum Lenken der Laufwerke verfügen Baumaschine über eine Lenkeinrichtung, die den lenkbaren Laufwerken der Baumaschinen zugeordnete Lenkeinrichtungs-Betätigungseinrichtungen umfassen, die an den Laufwerken angreifen, um die Fahrtrichtung der Laufwerke einzustellen. Bei einer Kleinfräse beispielsweise mit nur einem lenkbaren Laufwerk weist die Lenkeinrichtung nur eine Lenkeinrichtungs-Betätigungseinrichtung auf, die eine Kolben/Zylinderanordnung mit einem doppelt wirkenden Hydraulikzylinder sein kann, der die Fahrrichtung des Laufwerks in die eine oder andere Richtung verstellt.

Die Lenkeinrichtungen von Baumaschinen sind im Allgemeinen hydrostatische Lenkungen, bei der die eigentlichen Lenkkräfte nicht vom Fahrzeugführer, sondern von einer vom Motor des Fahrzeugs angetriebenen Hydraulikpumpe aufgebracht werden. Das Lenkaggregat von hydraulischen Lenkeinrichtungen wird auch als Orbitrol oder Servostat bezeichnet. Da das Steuerelement, beispielsweise das Lenkrad, eines Orbitrol im Allgemeinen als eine von Hand zu betätigende Hydraulikpumpe fungiert, kann der Fahrzeugführer noch durch Drehen des Lenkrades den betreffenden Druckraum des Hydraulikzylinders der Kolben/Zylinderanordnung der Lenkeinrichtung mit Hydraulikflüssigkeit selbst dann beaufschlagen, wenn die Hydraulikpumpe ausfällt, so dass die Lenkbewegung ausgeführt wird.

Darüber hinaus verfügen die bekannten Baumaschinen über eine Bremseinrichtung, die den Laufwerken der Baumaschinen zugeordnete hydraulisch betätigbare Bremseinrichtungs-Betätigungseinrichtungen umfasst, mit denen beispielsweise Bremsbacken oder Bremsscheiben (Bremslamellen) betätigt werden können, um das Laufwerk bzw. die Baumaschine zu bremsen. Die Baumaschine kann einzelnen oder sämtlichen Laufwerken zugeordnete Bremseinrichtungs-Betätigungseinrichtungen aufweisen.

Die Bremseinrichtungs-Betätigungseinrichtung umfasst mindestens einen Druckraum, der mit einer Hydraulikflüssigkeit beaufschlagt werden kann, um eine Bremsbacke oder Bremsscheibe (Bremslammelle) zu bewegen. Wenn der Druckraum nicht mit Hydraulikflüssigkeit beaufschlagt wird, befindet sich die Bremseinrichtungs-Betätigungseinrichtung in einer Feststellposition, so dass die Bremse angezogen und das Laufwerk gebremst ist. Wenn der Druckraum der Bremseinrichtungs-Betätigungseinrichtung hingegen mit Hydraulikflüssigkeit beaufschlagt wird, nimmt die Bremseinrichtungs-Betätigungseinrichtung eine Betriebsposition ein, so dass die Bremse gelöst und das Laufwerk ungebremst ist.

Zur Versorgung der Lenkeinrichtung und der Bremseinrichtung ist eine Hydraulikquelle vorgesehen, die eine Hydraulikpumpe und einen Hydrauliktank aufweist.

Im Fall einer Störung des Hydrauliksystems, beispielsweise beim Ausfall der Hydraulikpumpe, kann die Bremseinrichtungs-Betätigungseinrichtung nicht mehr betätigt werden. Folglich kann die Baumaschine nicht mehr verfahren werden. Für diesen Fall sehen die bekannten Baumaschinen im Allgemeinen einen Notbetrieb vor.

Der Erfindung liegt die Aufgabe zugrunde, einen zuverlässig arbeitenden Notbetrieb für eine selbstfahrende Baumaschine mit einem relativ einfachen technischen Aufwand vorzusehen, in dem die Bremseinrichtungs-Betätigungseinrichtung der Bremseinrichtung auch bei einer Störung des Hydrauliksystems noch betätigt werden kann. Insbesondere ist eine Aufgabe der Erfindung, eine versehentliche Aktivierung des Notbetriebs auszuschließen.

Die Lösung dieser Aufgabe erfolgt erfindungsgemäß mit den Merkmalen des Patentanspruchs 1. Die Gegenstände der abhängigen Ansprüche betreffen bevorzugte Ausführungsformen der Erfindung.

Die erfindungsgemäße selbstfahrende Baumaschine weist eine Bremseinrichtung auf, die mindestens eine hydraulisch betätigbare Bremseinrichtungs-Betätigungseinrichtung umfasst, die einen mit einer Hydraulikflüssigkeit beaufschlagbaren Druckraum aufweist. Eine Bremseinrichtungs-Betätigungseinrichtung kann für ein Laufwerk oder es können mehrere Bremseinrichtungs-Betätigungseinrichtungen für mehrere Laufwerke vorgesehen sein, wobei jedem Laufwerk eine Bremseinrichtungs-Betätigungseinrichtung zugeordnet sein kann.

Die Bremseinrichtungs-Betätigungseinrichtung ist derart ausgebildet, dass in einer Feststellposition, in der der Druckraum der Bremseinrichtungs-Betätigungseinrichtung nicht mit Hydraulikflüssigkeit beaufschlagt wird, das Laufwerk, dem die Bremseinrichtungs-Betätigungseinrichtung zugeordnet ist, gebremst ist, und in einer Betriebsposition, in der der Druckraum der Bremseinrichtungs-Betätigungseinrichtung mit Hydraulikflüssigkeit beaufschlagt wird, das Laufwerk ungebremst ist.

Darüber hinaus weist die erfindungsgemäße Baumaschine eine hydrostatische Lenkeinrichtung auf, die mindestens eine Lenkeinrichtungs-Betätigungseinrichtung umfasst, die einen ersten und einen zweiten mit einer Hydraulikflüssigkeit beaufschlagbaren Druckraum aufweist. Eine Lenkeinrichtungs-Betätigungseinrichtung kann für ein oder mehrere Laufwerke oder es können mehrere Lenkeinrichtungs-Betätigungseinrichtungen für mehrere lenkbare Laufwerke vorgesehen sein, wobei jedem lenkbaren Laufwerk eine Bremseinrichtungs-Betätigungseinrichtung zugeordnet sein kann.

Die Lenkeinrichtung ist derart ausgebildet, dass beim Lenken in die eine Richtung der eine Druckraum der Lenkeinrichtungs-Betätigungseinrichtung und beim Lenken in die andere Richtung der andere Druckraum der Lenkeinrichtungs-Betätigungseinrichtung mit Hydraulikflüssigkeit beaufschlagt wird, so dass das Laufwerk, dem die Lenkeinrichtungs-Betätigungseinrichtung zugeordnet ist, eine Lenkbewegung ausführt.

Zur Betätigung der mindestens einen Bremseinrichtungs-Betätigungseinrichtung und der mindestens einen Lenkeinrichtungs-Betätigungseinrichtung ist ein Hydrauliksystem vorgesehen, welches eine Hydraulikquelle zur Bereitstellung von Hydraulikflüssigkeit für die Versorgung der Lenkeinrichtungs-Betätigungseinrichtung und der Bremseinrichtungs-Betätigungseinrichtung mit Hydraulikflüssigkeit aufweist, wobei das Hydrauliksystem derart ausgebildet ist, dass in der Betriebsposition der Druckraum der Bremseinrichtungs-Betätigungseinrichtung mit Hydraulikflüssigkeit beaufschlagt wird, so dass die Bremse gelöst ist und das Laufwerk bzw. die Baumaschine ungebremst ist.

Für den Fall einer Störung der Versorgung der Bremseinrichtungs-Betätigungseinrichtung mit Hydraulikflüssigkeit weist das Hydrauliksystem eine manuell betätigbare Notbetrieb-Ventilanordnung auf, die derart ausgebildet ist, dass nach deren manueller Betätigung eine Flüssigkeitsverbindung zwischen der Lenkeinrichtungs-Betätigungseinrichtung und dem Druckraum der Bremseinrichtungs-Betätigungseinrichtung geschaffen wird. Folglich strömt bei einer Betätigung der Lenkeinrichtungs-Betätigungseinrichtung Hydraulikflüssigkeit aus der Lenkeinrichtungs-Betätigungseinrichtung in den Druckraum der Bremseinrichtungs-Betätigungseinrichtung, so dass die Bremseinrichtung die Betriebsposition einnimmt. Die Versorgung der Bremseinrichtung mit Hydraulikflüssigkeit erfolgt also mittels der hydrostatischen Lenkeinrichtung. Dabei wird von der besonderen Betriebsweise der bekannten hydrostatischen Lenkeinrichtungen Gebrauch gemacht, die eine Förderung von Hydraulikflüssigkeit durch manuelle Betätigung eines Steuerelements, beispielsweise durch Drehen eines Lenkrades, auch bei Ausfall der Hydraulikpumpe erlaubt. Beispielsweise kann eine in die hydrostatische Lenkeinrichtung integrierte und als Handpumpe arbeitende Zumesspumpe zur Bereitstellung der Hydraulikflüssigkeit benutzt werden.

Die Notbetrieb-Ventilanordnung zeichnet sich weiterhin dadurch aus, dass die Ventilanordnung von einem Ventilblock gebildet wird, der einen ersten Zulaufanschluss, der mit der Hydraulikquelle in Flüssigkeitsverbindung steht, einen zweiten Zulaufanschluss, der mit einem der beiden Druckräume der Lenkeinrichtungs-Betätigungseinrichtung in Flüssigkeitsverbindung steht, und einem Arbeitsanschluss, der mit dem Druckraum der Bremseinrichtungs-Betätigungseinrichtung in Flüssigkeitsverbindung steht, aufweist. In dem Ventilblock sind ein den ersten Zulaufanschluss mit dem Arbeitsanschluss verbindenden erster Durchflussweg, der von einer ersten Absperrschraube absperrbar ist, und ein den zweiten Zulaufanschluss mit dem Arbeitsanschluss verbindenden zweiter Durchflussweg, der von einer zweiten Absperrschraube absperrbar ist, ausgebildet. Durch Drehen der Absperrschrauben kann der eine oder andere Durchflussweg geöffnet oder geschlossen und eine Betriebsposition oder ein Notbetrieb vorgegeben werden.

Der Ventilblock mit den Absperrschrauben bildet eine kompakte Einheit ohne aufwendige Mechanik, die zuverlässig arbeitet. Darüber hinaus erfordert die Vorgabe des Notbetriebs den Einsatz von Werkzeug, um die Absperrschrauben drehen zu können. Ein unbeabsichtigtes Einstellen des Notbetriebs, in dem der Fahrzeugführer beispielsweise versehentlich einen frei zugänglichen Stellhebel betätigt, ist daher ausgeschlossen.

Die erste und/oder zweite Absperrschraube können einen Schraubenkopf mit einem Mitnahmeprofil, insbesondere einem Innenmehrkant, beispielsweise einem Innensechskant, aufweisen, so dass eine Verstellung der Absperrschraube nur mit einem Inbusschlüssel möglich ist. Zur Sicherung der ersten und/oder zweiten Absperrschraube kann deren Schraubenkopf ein Außengewinde aufweisen, so dass auf die Absperrschraube eine Kontermutter geschraubt werden kann. Die erste und zweite Absperrschraube sind vorzugsweise in mit einem Innengewinde versehene Bohrungen des Ventilblocks geschraubt, die auf einer Seite des Ventilblocks nebeneinander angeordnet sein können. Dadurch sind die Absperrschrauben von einer Seite aus leicht zugänglich.

Eine Ausführungsform sieht vor, dass die Lenkeinrichtungs-Betätigungseinrichtung eine Kolben/Zylinder-Anordnung mit einem doppelt wirkenden Hydraulikzylinder aufweist, wobei der zweite Zulaufanschluss der Notbetrieb-Ventilanordnung mit einem der beiden Druckräume in Flüssigkeitsverbindung steht. Es können aber auch mehrere doppelt wirkende Hydraulikzylinder vorgesehen sein. Anstelle eines doppelt wirkenden Hydraulikzylinders können auch zwei einfach wirkende Hydraulikzylinder vorgesehen sein.

Ein Rückfluss von Hydraulikflüssigkeit bei einer Betätigung der Bremseinrichtung von der Bremseinrichtung in die Lenkeinrichtung kann dadurch verhindert werden, dass der zweite Zulaufanschluss der Notbetrieb-Ventilanordnung mit einem der beiden Druckräume der Lenkeinrichtungs-Betätigungseinrichtung über einen Durchflussweg verbunden ist, in dem ein Rückschlagventil vorgesehen ist, dass in Richtung des zweiten Zulaufs der Notbetrieb-Ventilanordnung geöffnet ist.

Eine weitere Ausführungsform sieht vor, dass das Hydrauliksystem ein Mehrwegeventil mit einer ersten und einer zweiten Schaltstellung aufweist, wobei das Hydrauliksystem derart ausgebildet ist, dass der Druckraum der Bremseinrichtungs-Betätigungseinrichtung in der ersten Schaltstellung nicht mit Hydraulikflüssigkeit beaufschlagt wird, so dass das Laufwerk gebremst ist, und in der zweiten Schaltstellung mit Hydraulikflüssigkeit beaufschlagt wird, so dass das Laufwerk ungebremst ist. Das Mehrwegeventil ist vorzugsweise in die erste Schaltstellung vorgespannt, so dass das Laufwerk bzw. die Baumaschine nur dann verfahren werden kann, wenn die Bremse aktiv gelöst wird (Feststellbremse). Das Mehrwegeventil ist vorzugsweise ein elektromagnetisch gesteuertes Mehrwegeventil, das von der Steuereinheit der Baumaschine angesteuert werden kann.

Eine weitere Ausführungsform sieht vor, dass die Notbetrieb-Ventilanordnung und das Mehrwegeventil eine den Ventilblock umfassende Baueinheit bilden. Dadurch wird ein besonders kompakter und einfacher Aufbau erzielt.

Die Hydraulikquelle kann eine Hydraulikpumpe mit einem Druckanschluss und einem Sauganschluss und einen Hydraulikflüssigkeitstank umfassen, wobei der Sauganschluss der Hydraulikpumpe mit dem Hydraulikflüssigkeitstank in Flüssigkeitsverbindung steht, und der Druckanschluss der Hydraulikpumpe mit einem Zulauf der Lenkeinrichtung und ein Ablauf der Lenkeinrichtung mit dem Hydraulikflüssigkeitstank in Flüssigkeitsverbindung steht.

Das Mehrwegeventil kann ein 2/3 Wegeventil mit einem Zulaufanschluss und einem Ablaufanschluss und einem Arbeitsanschluss sein, wobei der Zulaufanschluss des Mehrwegeventils mit dem Druckanschluss der Hydraulikpumpe und der Ablaufanschluss des Mehrwegeventils mit dem Hydraulikflüssigkeitstank und der Arbeitsanschluss des Mehrwegeventils mit dem ersten Zulaufanschluss der Notbetrieb-Ventilanordnung in Flüssigkeitsverbindung steht.

Wenn das Mehrwegeventil und die Notbetrieb-Ventilanordnung einen gemeinsamen Ventilblock haben, können der Arbeitsanschluss des Mehrwegeventils und der erste Zulaufanschluss der Notbetrieb-Ventilanordnung in dem Ventilblock über einen Kanal direkt miteinander verbunden sein. Damit entfallen zusätzliche Hydraulikleitungen.

Die selbstfahrende Baumaschine kann beispielsweise eine Straßenfräsmaschine, ein Stabilisierer, ein Recycler oder ein Surface-Miner sein. Ein besonderer Anwendungsfall ist eine Straßenfräsmaschine, insbesondere eine Kleinfräse, die sich durch ein in Arbeitsrichtung vorderes Laufwerk und ein hinteres, linkes Laufwerk und ein hinteres, rechtes Laufwerk, auszeichnet, wobei das vordere Laufwerk ein lenkbares Laufwerk ist. Die Laufwerke können Räder sein. Bei einer derartigen Kleinfräse kann eine Lenkeinrichtungs-Betätigungseinrichtung dem vorderen Laufwerk und eine erste Bremseinrichtungs-Betätigungseinrichtung dem hinteren, linken Laufwerk, insbesondere Rad, und eine zweite Bremseinrichtungs-Betätigungseinrichtung dem hinteren, rechten Laufwerk, insbesondere Rad, zugeordnet sein.

Es zeigen:
- Fig. 1: eine Kleinfräse als ein Beispiel für eine erfindungsgemäße selbstfahrende Baumaschine in der Seitenansicht,
- Fig. 2: den Hydraulikschaltplan der Lenkeinrichtung und der Bremseinrichtung der selbstfahrenden Baumaschine,
- Fig. 3A: eine Ansicht auf den Ventilblock der Notbetrieb-Ventilanordnung der Bremseinrichtung, wobei sich die Notbetrieb-Ventilanordnung in der Betriebsposition befindet,
- Fig. 3B: einen Schnitt durch die Notbetrieb-Ventilanordnung von Fig. 3A,
- Fig. 4A: eine Ansicht auf den Ventilblock der Notbetrieb-Ventilanordnung der Bremseinrichtung, wobei sich die Notbetrieb-Ventilanordnung in der Notbetriebsposition befindet,
- Fig. 4B: einen Schnitt durch die Notbetrieb-Ventilanordnung von Fig. 4A,
- Fig. 5: eine perspektive Darstellung der Notbetrieb-Ventilanordnung von Fig. 3A bis Fig. 4B,
- Fig. 6A: eine Ausführungsform, bei der das Mehrwegeventil und die Notbetrieb-Ventilanordnung der Bremseinrichtung eine Baueinheit bilden, wobei sich die Notbetrieb-Ventilanordnung in der Betriebsposition befindet
- Fig. 6B: eine Seitenansicht der Baueinheit von Fig. 6A,
- Fig. 7A: die Baueinheit von Notbetrieb-Ventilanordnung und Bremseinrichtung, wobei sich die Notbetrieb-Ventilanordnung in der Notbetriebsposition befindet,
- Fig. 7B: eine Seitenansicht der Baueinheit von Fig. 7A und
- Fig. 8: eine perspektive Darstellung der Baueinheit von Fig. 6A bis Fig. 7B.

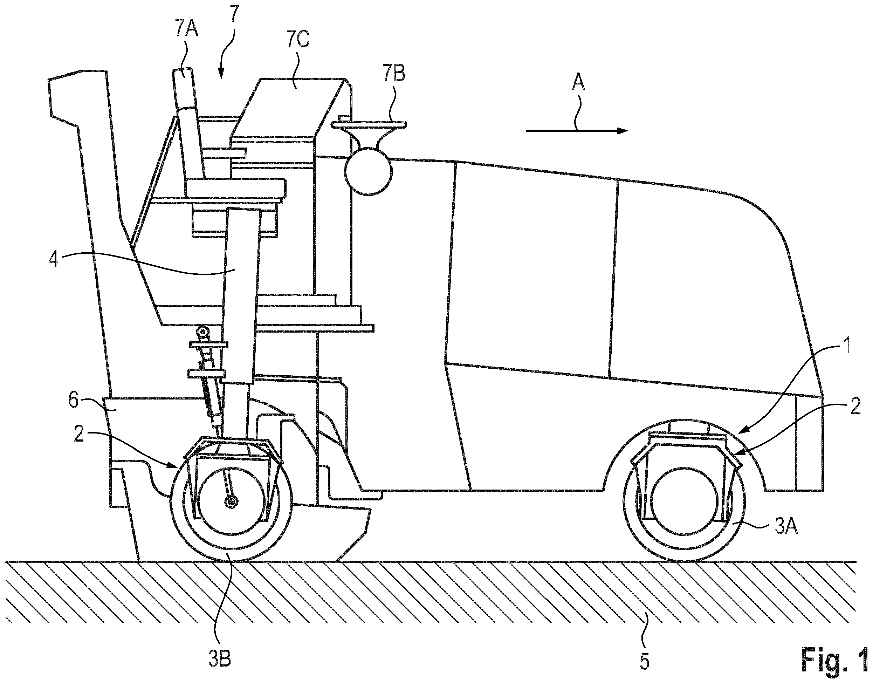

Fig. 1 zeigt in der Seitenansicht eine Straßenfräsmaschine als ein Beispiel für eine selbstfahrende Baumaschine. Bei der Straßenfräsmaschine handelt es um eine Kleinfräse. Die Baumaschine weist einen Maschinenrahmen 1 auf, der von einem Fahrwerk 2 getragen wird. Das Fahrwerk 2 weist ein lenkbares, vorderes Laufwerk 3A, insbesondere Rad, und zwei nicht lenkbare, hintere Laufwerke, insbesondere Räder, auf. In Fig. 1 ist nur das in Arbeitsrichtung A rechte hintere Laufwerk 3B zu erkennen. Bei den bekannten Baumaschinen kann das Fahrwerk anstelle von Rädern auch Kettenlaufwerke aufweisen. Der Maschinenrahmen 1 der Baumaschine ist an Hubsäulen 4 gegenüber der Oberfläche des Bodens 5 in der Höhe verstellbar.

Die Baumaschine verfügt über eine Arbeitswalze, bei der es sich um eine Fräswalze handelt. Die in Fig. 1 nicht erkennbare Fräswalze ist am Maschinenrahmen 1 in einem Fräswalzengehäuse 6 angeordnet. Oberhalb des Fräswalzengehäuses 6 befindet sich der Fahrstand 7, der einen Fahrersitz 7A, ein Lenkrad 7B und ein Bedienpult 7C umfasst.

Die Baumaschine weist eine hydrostatische Lenkeinrichtung 9 auf, die sich dadurch auszeichnet, dass die eigentlichen Lenkkräfte nicht vom Fahrzeugführer, sondern von einer vom Motor der Baumaschine angetriebenen Hydraulikpumpe aufgebracht werden. Wenn der Maschinenführer das Lenkrad in die eine oder andere Richtung dreht, ändert sich die Fahrtrichtung des vorderen Laufwerks 3A.

Darüber hinaus weist die Baumaschine eine hydraulische Bremseinrichtung 8 auf, die einen Notbetrieb vorsieht. Die hydraulische Bremseinrichtung wird nachfolgend zusammen mit der Lenkeinrichtung im Einzelnen beschrieben.

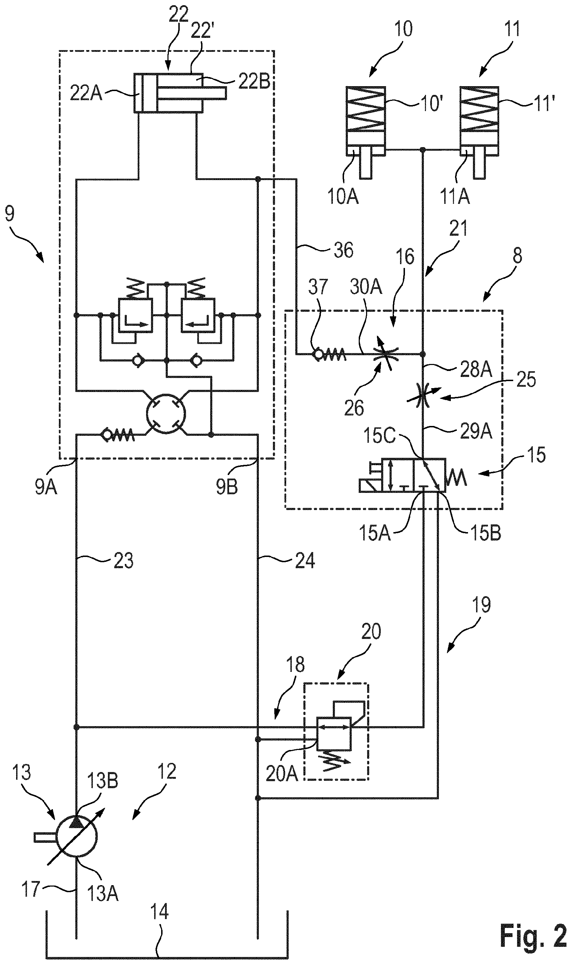

Fig. 2 zeigt den Hydraulikschaltplan der Bremseinrichtung 8 zusammen mit der Lenkeinrichtung 9. Die Bremseinrichtung 8 weist für das hintere linke Laufwerk eine erste Bremseinrichtungs-Betätigungseinrichtung 10 und für das hintere rechte Laufwerk eine zweite Bremseinrichtungs-Betätigungseinrichtung 11 auf. Die Bremseinrichtungs-Betätigungseinrichtungen 10, 11 weisen bei dem vorliegenden Ausführungsbeispiel Kolben/Zylinder-Anordnungen 10', 11' auf, deren Kolben beispielsweise mit einer Bremsbacke oder Bremsscheibe (Lamelle) der Bremse zusammenwirken. Der Kolben ist in eine Position vorgespannt, in der die Bremse angezogen ist. Wenn der Druckraum 10A, 11A der ersten und zweiten Kolben/Zylinder-Anordnung 10', 11' mit Hydraulikflüssigkeit beaufschlagt wird, sind die Bremsen der hinteren Laufwerke gelöst.

Die Hydraulikflüssigkeit für die Bremseinrichtung 8 wird von einer Hydraulikquelle 12 bereitgestellt, die eine Hydraulikpumpe 13 und einen Hydraulikflüssigkeitstank 14 umfasst.

Darüber hinaus weist die Bremseinrichtung 8 ein elektromagnetisch gesteuertes Mehrwegeventil 15 und eine Notbetrieb-Ventilanordnung 16 auf, die von Hand bedient wird.

Das Mehrwegeventil 15 ist ein 3/2-Mehrwegeventil mit einer ersten und einer zweiten Schaltstellung und einem Zulaufanschluss 15A und einem Ablaufanschluss 15B sowie einem Arbeitsanschluss 15C. Das Mehrwegeventil 15 ist in die erste Schaltstellung vorgespannt, in der der Zulaufanschluss 15A gesperrt und der Ablaufanschluss 15B mit dem Arbeitsanschluss 15C verbunden ist. In der zweiten Schaltstellung ist der Zulaufanschluss 15A mit dem Arbeitsanschluss 15C verbunden, wobei der Ablaufanschluss 15B gesperrt ist.

Der Sauganschluss 13A der Hydraulikpumpe 13 ist über eine Hydraulikleitung 17 mit dem Hydraulikflüssigkeitstank 14 verbunden, und der Druckanschluss 13B der Hydraulikpumpe 13 ist über eine Zulauf-Hydraulikleitung 18 mit dem Zulaufanschluss 15A des Mehrwegeventils 15 verbunden. Der Ablaufanschluss 15B des Mehrwegeventils 15 ist über eine Ablauf-Hydraulikleitung 19 mit dem Hydraulikflüssigkeitstank 14 verbunden. In die Zulauf-Hydraulikleitung 18 ist ein einstellbares Druckregelventil 20 mit einer Abflussöffnung 20A geschaltet, die mit der Ablauf- Hydraulikleitung 19 in Flüssigkeitsverbindung steht.

Der Arbeitsanschluss 15C des Mehrwegeventils 15 steht über einen Durchflussweg 21 mit den Druckräumen 10A, 11A der ersten und zweiten Bremseinrichtungs-Betätigungseinrichtung 10, 11 in Flüssigkeitsverbindung. Wenn das Mehrwegeventil 15 nicht angesteuert wird und sich in der ersten Schaltstellung befindet, werden die Druckräume 10A, 11A der ersten und zweiten Bremseinrichtungs-Betätigungseinrichtung 10, 11 nicht mit Hydraulikflüssigkeit beaufschlagt, so dass sich die Betätigungseinrichtungen in einer Feststellposition befinden, in der die Bremsen angezogen sind. Wenn die Druckräume in der zweiten Schaltstellung des Mehrwegeventils hingegen mit Hydraulikflüssigkeit beaufschlagt werden, befinden sich die Betätigungseinrichtungen in einer Betriebsposition, so dass die Bremsen gelöst sind.

Im Falle einer Störung in der Hydraulik, beispielsweise wenn die Hydraulikpumpe 13 ausfällt, können die Bremseinrichtungs-Betätigungseinrichtungen 10, 11 zum Lösen der Bremsen nicht mehr mit Hydraulikflüssigkeit beaufschlagt werden. Für diesen Fall sieht die Bremseinrichtung 8 einen Notbetrieb vor.

Für den Notbetrieb ist die Notbetriebs-Ventilanordnung 16 vorgesehen, die mit der hydrostatischen Lenkeinrichtung 9 der Baumaschine zusammenwirkt. Die Lenkeinrichtung 9 verfügt über eine Lenkeinrichtungs-Betätigungseinrichtung 22, die bei dem vorliegenden Ausführungsbeispiel eine dem vorderen lenkbaren Laufwerk 3A zugeordnete Kolben/Zylinder-Anordnung 22' mit einem doppelt wirkenden Hydraulikzylinder aufweist, der einen ersten Druckraum 22A auf der Kolbenseite und einen zweiten Druckraum 22B auf der Stangenseite hat. Die Lenkeinrichtung 9 weist einen Zulauf 9A und einen Ablauf 9B auf, wobei der Zulauf 9A über eine Zulaufleitung 23 mit dem Druckanschluss 13B der Hydraulikpumpe 13 und der Ablauf 9B über eine Ablaufleitung 24 mit dem Hydraulikflüssigkeitstank 14 verbunden ist, so dass die Lenkeinrichtung 9 mit Hydraulikflüssigkeit versorgt werden kann. Die Lenkeinrichtung 9 verfügt noch über weitere Komponenten, von denen einzelne Komponenten in Fig. 2 dargestellt sind. Da diese Komponenten aber zum Stand der Technik gehören, wird auf eine weitere Beschreibung verzichtet.

Die Lenkeinrichtung 9 sieht eine Notfunktion vor, so dass der Fahrzeugführer auch bei einem Ausfall der Hydraulikpumpe 13 durch Drehen des Lenkrades 7B (Fig. 1) die Baumaschine lenken kann. Wenn der Fahrzeugführer das Lenkrad 7B in eine Richtung, beispielsweise im Uhrzeigersinn dreht, wird Hydraulikflüssigkeit in einen der beiden Druckräume 22A, 22B der Kolben/Zylinderanordnung 22', beispielsweise in den stangenseitigen Druckraum 22B, gefördert, wodurch der Kolben eingefahren wird. Die Hydraulikflüssigkeit kann dann aus dem anderen Druckraum, beispielsweise dem kolbenseitigen Druckraum 22A, in den Hydraulikflüssigkeitstank 14 abfließen.

Nachfolgend wird die Notbetrieb-Ventilanordnung 16 im Einzelnen beschrieben. Die Notbetrieb-Ventilanordnung 16 umfasst zwei Absperrorgane 25, 26, die in dem Hydraulikschaltplan als ein erstes Drosselventil und ein zweites Drosselventil, die einen einstellbaren Querschnitt haben, dargestellt sind. Der Querschnitt kann aber auch konstant sein. Für die Funktion der Notbetrieb-Ventilanordnung 16 ist ausreichend, wenn sich die beiden Durchflusswege unabhängig voneinander absperren bzw. öffnen lassen.

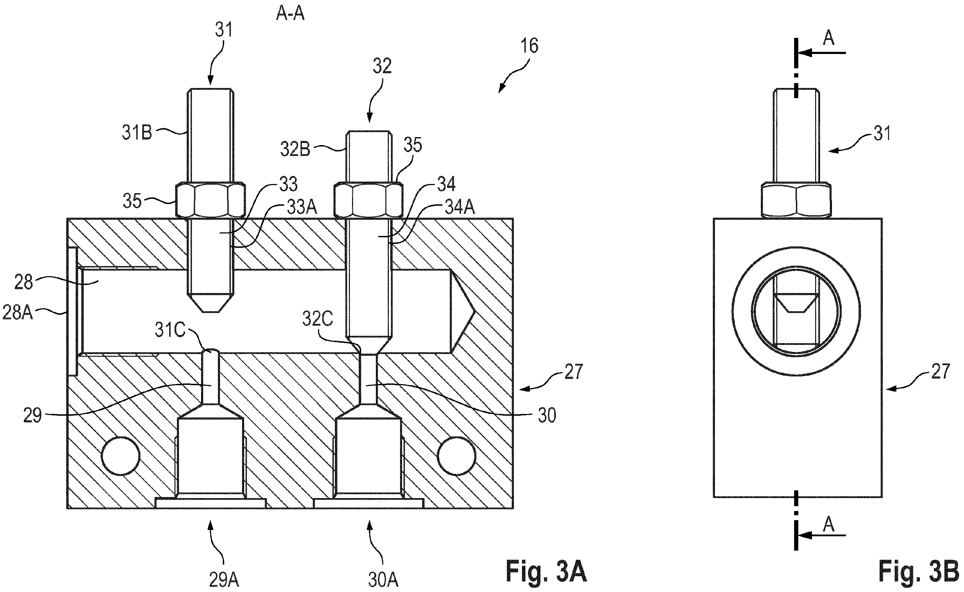

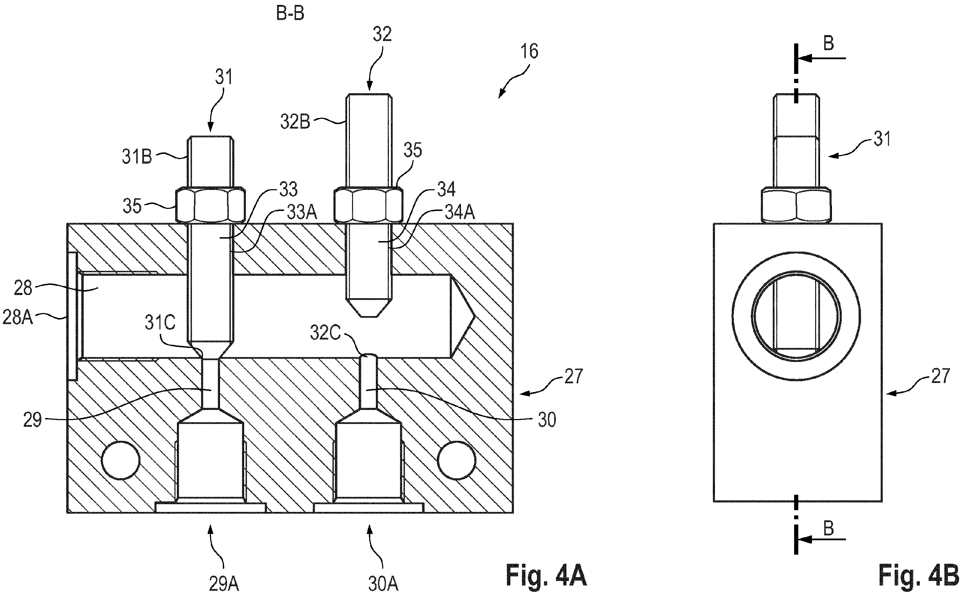

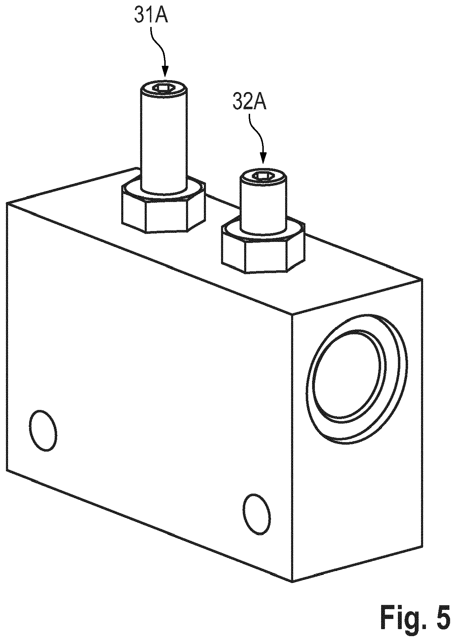

Die Figuren 3A und 3B zeigen ein erstes Ausführungsbeispiel der Notbetrieb-Ventilanordnung 16 in einer ersten Schaltstellung und die Figuren 4A und 4B zeigen die Notbetrieb-Ventilanordnung in einer zweiten Schaltstellung. Fig. 5 zeigt eine perspektivische Darstellung der Notbetrieb-Ventilanordnung. Die einander entsprechenden Teile von Fig. 3 und den Figuren 3A bis 4B sind mit denselben Bezugszeichen versehen.

Die Notbetrieb-Ventilanordnung 16 weist einen Ventilblock 27 auf, in dem ein zentraler Kanal 28 mit einem Arbeitsanschluss 28A, beispielsweise an der Stirnseite des Ventilblocks, ausgebildet ist. Von dem zentralen Kanal 28 zweigt ein erste Zulaufkanal 29 mit einem ersten Zulaufanschluss 29A und ein zweiter Zulaufkanal 30 mit einem zweiten Zulaufanschluss 30A ab. Der erste und zweite Zulaufanschluss 29A, 30A können nebeneinander an einer Längsseite des Ventilblocks vorgesehen sein. Zum Absperren des ersten Zulaufkanals 29 kann als Absperrorgan 25 eine erste Absperrschraube 31 und zum Absperren des zweiten Zulaufkanals 30 kann als Absperrorgan 25 eine zweite Absperrschraube 32 vorgesehen sein. Die Absperrschrauben 31, 32, die in Bohrungen 33, 34, die ein Innengewinde 33A, 34A haben, geschraubt sind, haben einen Schraubenkopf mit einem Mitnahmeprofil 31A, 32A, insbesondere ein Innenmehrkant, vorzugsweise ein Innensechskant für einen Inbusschlüssel (Fig. 5). Der Schraubenkopf der Absperrschrauben 31, 32 ist mit einem Außengewinde 31B, 32B versehen, wobei auf die Absperrschrauben eine Kontermutter 35 geschraubt ist.

Der Arbeitsanschluss 15C des Mehrwegeventils 15 steht über einen Durchflussweg mit dem ersten Zulaufanschluss 29A der Notbetrieb-Ventilanordnung 16 in Flüssigkeitsverbindung, während der Arbeitsanschluss 28A der Notbetrieb-Ventilanordnung 16 über den Durchflussweg 21 mit den beiden Druckräumen 10A, 10B der Bremseinrichtungs-Betätigungseinrichtungen 10, 11 in Flüssigkeitsverbindung steht.

Der zweite Zulaufanschluss 30A der Notbetrieb-Ventilanordnung 16 steht über einen Durchflussweg, der eine zu der Lenkeinrichtung führende Bypass-Hydraulikleitung 36 umfasst, mit dem stangenseitigen Druckraum 22B der Kolben/Zylinderanordnung 22' der Lenkeinrichtung 9 in Flüssigkeitsverbindung. In die Bypass-Hydraulikleitung 36 ist ein Rückschlagventil 37 geschaltet, dass öffnet, wenn Hydraulikflüssigkeit aus dem stangenseitigen Druckraum 22B der Kolben/Zylinderanordnung 22 zu der Notbetrieb-Ventilanordnung 16 strömt. Ansonsten ist das Rückschlagventil 37 geschlossen.

In der Betriebsposition sitzt die erste Absperrschraube 31 nicht auf dem ersten Ventilsitz 31C, der in dem Ventilblock 27 ausgebildet ist, während die zweite Absperrschraube 32 auf dem zweiten Ventilsitz 32C sitzt, der in dem Ventilblock ausgebildet ist. Folglich kann die Hydraulikpumpe 13 Hydraulikflüssigkeit in die Druckräume 10A, 10B der Bremseinrichtungs-Betätigungseinrichtungen 10, 11 fördern, wenn das Mehrwegeventil 15 in die zweite Schaltstellung geschaltet ist, so dass die Bremsen gelöst werden. Die Bypass-Hydraulikleitung 36 ist hingegen durch das Rückschlagventil 37 abgesperrt, so dass die Funktion der Bremseinrichtungs-Betätigungseinrichtung durch die Lenkeinrichtung 9 nicht gestört wird.

Es sei angenommen, dass die Hydraulikpumpe 13 ausgefallen ist. Dann kann in einen Notbetrieb geschaltet werden. Dies kann nur dann erfolgen, wenn die Kontermuttern 35 des ersten und zweiten Absperrorgans 31, 32 mit einem Maulschlüssel gelöst und mit einem Inbusschlüssel die erste Absperrschraube 31 in den Ventilblock 27 geschraubt und die zweite Absperrschraube 32 aus dem Ventilblock geschraubt wird, so dass der erste Zulaufkanal 29 abgesperrt und der zweite Zulaufkanal 30 geöffnet wird (Figuren 4A und 4B). Selbstverständlich darf die zweite Absperrschraube 32 nicht vollständig aus dem Ventilblock 27 herausgeschraubt werden, sondern nur so weit bis ein Ölfluss gewährleistet ist. Wenn der Fahrzeugführer nach Ausfall der Hydraulikpumpe 13 nunmehr das Lenkrad 7B dreht, fördert die Lenkeinrichtung 9 in der Notfunktion Hydraulikflüssigkeit in einen der beiden Druckräume der Kolben/Zylinderanordnung 22', beispielsweise in den stangenseitigen Druckraum 22B, während aus dem kolbenseitigen Druckraum 22A Hydraulikflüssigkeit in den Hydraulikflüssigkeitstank 14 abfließt. Dadurch wird der Kolben der Kolben/Zylinderanordnung 22' eingefahren, wodurch sich das lenkbare Laufwerk 3A solange in die entsprechende Richtung dreht bis es seinen mechanischen Anschlag erreicht hat. Wenn der Fahrzeugführer das Lenkrad 7B weiterdreht, kann Hydraulikflüssigkeit über die Bypass-Hydraulikleitung 36 zu dem zweiten Zulaufanschluss 30A der Notbetrieb-Ventilanordnung 16 strömen und von dem Arbeitsanschluss 28A der Notbetrieb-Ventilanordnung 16 dann zu den Druckräumen 10A, 11A der Bremseinrichtungs-Betätigungseinrichtungen 10, 11 strömen, wodurch die Bremsen gelöst werden.

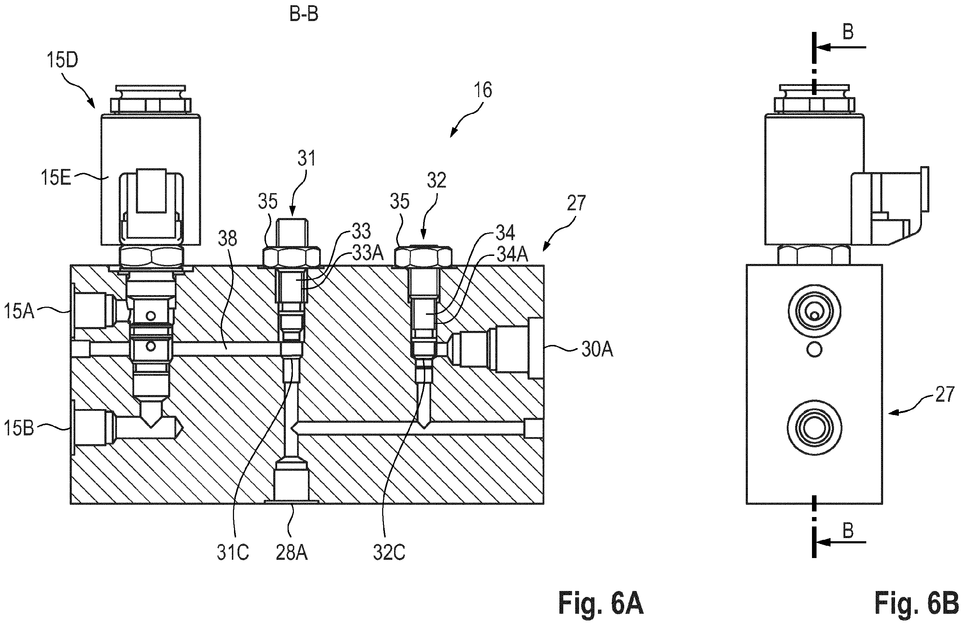

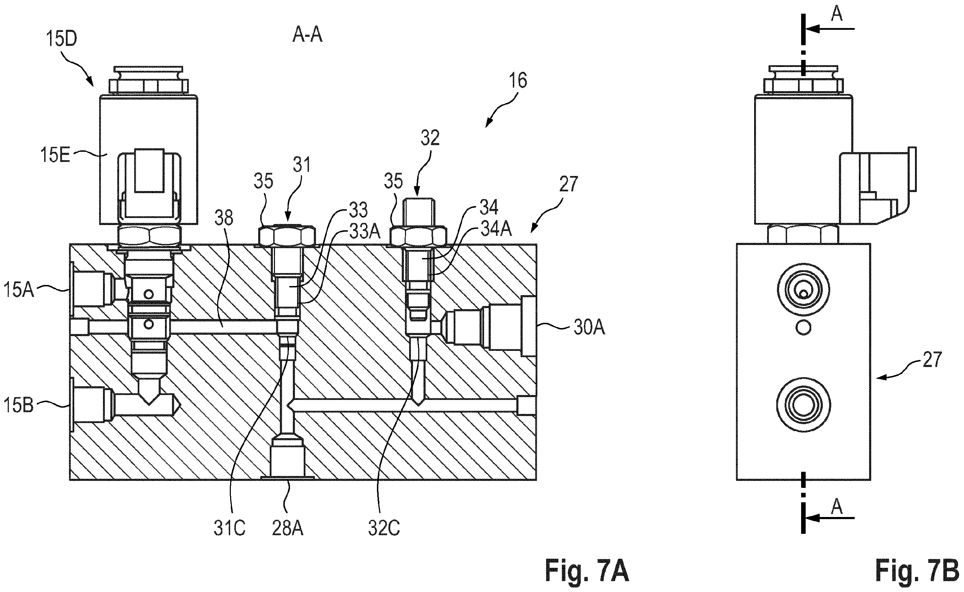

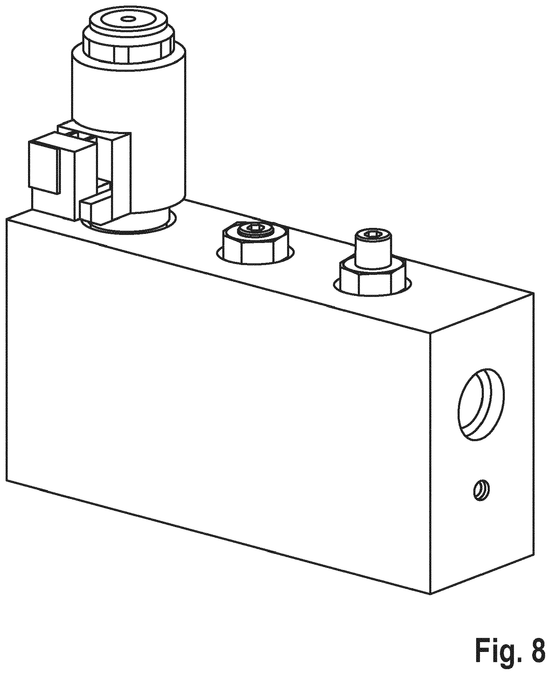

Die Figuren 6A und 6B zeigen ein zweites Ausführungsbeispiel der Notbetrieb-Ventilanordnung 16 in der ersten Schaltstellung und die Figuren 7A und 7B zeigen die Notbetrieb-Ventilanordnung 16 in der zweiten Schaltstellung (Notbetrieb). Fig. 8 zeigt eine perspektivische Darstellung der Notbetrieb-Ventilanordnung 16. Das zweite Ausführungsbeispiel unterscheidet sich von dem ersten Ausführungsbeispiel dadurch, dass das Mehrwegeventil 15 und die Notbetrieb-Ventilanordnung 16 eine Baueinheit bilden. Die einander entsprechenden Teil sind mit denselben Bezugszeichen versehen.

Das Mehrwegeventil 15 und die Notbetrieb-Ventilanordnung 16 weisen eine gemeinsamen Ventilblock 27 auf, der den Zulaufanschluss 15A und den Ablaufanschluss 15B des Mehrwegeventils 15 sowie den Arbeitsanschluss 28A und den zweiten Zulaufanschluss 30A der Notbetrieb-Ventilanordnung 16 aufweist. Der Arbeitsanschluss 15C des Mehrwegeventils 15 und der erste Zulaufanschluss 29A der Notbetrieb-Ventilanordnung 16 sind mit einem in dem Ventilblock 27 ausgebildeten Kanal 38 verbunden. Das Mehrwegeventil 15 weist einen elektromagnetisch betätigbaren Ventilkörper 15D auf, der in eine Bohrung 39 in dem Ventilblock 27 geschraubt ist. Der Aktor zur Betätigung des Mehrwegeventils 15 befindet sich in einem Gehäusekörper 15E außerhalb des Ventilblocks 27. Die Absperrschrauben 31, 32 sind in mit Innengewinden 33A, 34A versehene Bohrungen 33, 34 des Ventilblocks 27 geschraubt.

Die Figuren 6A und 6B zeigen, dass in der Betriebsposition die erste Absperrschraube 31 nicht auf dem ersten Ventilsitz 31C sitzt, während die zweite Absperrschraube 32 auf dem zweiten Ventilsitz 32C sitzt. Wenn sich das Mehrwegeventil 15 in der zweiten Schaltstellung befindet, kann Hydraulikflüssigkeit somit von dem Zulaufanschluss 15A durch den Ventilblock 27 zu dem Arbeitsanschluss 28A strömen, der mit den Druckkammern 10A, 10B der Bremseinrichtungs-Betätigungseinrichtungen 10, 11 in Flüssigkeitsverbindung steht, während der Durchflussweg zu der Lenkeinrichtung abgesperrt ist.

Die Figuren 7A und 7B zeigen, dass in der Betriebsposition die erste Absperrschraube 31 auf dem ersten Ventilsitz 31C sitzt, während die zweite Absperrschraube 32 nicht auf dem zweiten Ventilsitz 32C (Notbetrieb). Die Hydraulikflüssigkeit kann nunmehr von dem Zulaufanschluss 30A durch den Ventilblock 27 zu dem Arbeitsanschluss 28A strömen, so dass sich die Bremsen lösen.

## Patentansprüche

1. Selbstfahrende Baumaschine, insbesondere Straßenfräsmaschine, Stabilisierer, Recycler oder Surface-Miner, aufweisend
einen Maschinenrahmen (1), der von einem Fahrwerk (2) getragen wird, das mehrere Laufwerke (3A, 3B) umfasst,
eine Bremseinrichtung (8), die mindestens eine hydraulisch betätigbare Bremseinrichtungs-Betätigungseinrichtung (10, 11) umfasst, die einen mit einer Hydraulikflüssigkeit beaufschlagbaren Druckraum (10A, 11A) aufweist, wobei die Bremseinrichtungs-Betätigungseinrichtung (10, 11) derart ausgebildet ist, dass in einer Feststellposition, in der der Druckraum (10A, 11A) der Bremseinrichtungs-Betätigungseinrichtung (10, 11) nicht mit Hydraulikflüssigkeit beaufschlagt wird, das Laufwerk (3A, 3B), dem die Bremseinrichtungs-Betätigungseinrichtung (10, 11) zugeordnet ist, gebremst ist, und in einer Betriebsposition, in der der Druckraum (10A, 11A) der Bremseinrichtungs-Betätigungseinrichtung (10, 11) mit Hydraulikflüssigkeit beaufschlagt wird, das Laufwerk (3A, 3B) ungebremst ist,
eine hydrostatische Lenkeinrichtung (9), die mindestens eine Lenkeinrichtungs-Betätigungseinrichtung (22) umfasst, die einen ersten und einen zweiten mit einer Hydraulikflüssigkeit beaufschlagbaren Druckraum (22A, 22B) aufweist, wobei die Lenkeinrichtung (9) derart ausgebildet ist, dass beim Lenken in die eine Richtung der eine Druckraum (22A, 22B) der Lenkeinrichtungs-Betätigungseinrichtung und beim Lenken in die andere Richtung der andere Druckraum (22A, 22B) der Lenkeinrichtungs-Betätigungseinrichtung (22) mit Hydraulikflüssigkeit beaufschlagt wird, so dass das Laufwerk (3A, 3B), dem die Lenkeinrichtungs-Betätigungseinrichtung (22) zugeordnet ist, eine Lenkbewegung ausführt,
ein Hydrauliksystem zur Betätigung der mindestens einen Bremseinrichtungs-Betätigungseinrichtung (10, 11) und der mindestens einen Lenkeinrichtungs-Betätigungseinrichtung (22), welches eine Hydraulikquelle (12) zur Bereitstellung von Hydraulikflüssigkeit für die Versorgung der Lenkeinrichtungs-Betätigungseinrichtung (22) und der Bremseinrichtungs-Betätigungseinrichtung (10, 11) mit Hydraulikflüssigkeit aufweist, wobei das Hydrauliksystem derart ausgebildet ist, dass in der Betriebsposition der Druckraum (10A, 11A) der Bremseinrichtungs-Betätigungseinrichtung (10, 11) mit Hydraulikflüssigkeit beaufschlagt wird,
wobei
das Hydrauliksystem eine manuell betätigbare Notbetrieb-Ventilanordnung (16) für den Fall einer Störung der Versorgung der Bremseinrichtungs-Betätigungseinrichtung (10, 11) mit Hydraulikflüssigkeit aufweist, welche derart ausgebildet ist, dass nach deren manueller Betätigung eine Flüssigkeitsverbindung zwischen der Lenkeinrichtungs-Betätigungseinrichtung (22) und dem Druckraum (10A, 11A) der Bremseinrichtungs-Betätigungseinrichtung (10, 11) geschaffen wird, so dass bei einer Betätigung der Lenkeinrichtungs-Betätigungseinrichtung (22) Hydraulikflüssigkeit aus der Lenkeinrichtungs-Betätigungseinrichtung (22) in den Druckraum (10A, 11A) der Bremseinrichtungs-Betätigungseinrichtung (10, 11) strömt, so dass die Bremseinrichtung (8) die Betriebsposition einnimmt, **dadurch gekennzeichnet, dass**
die Notbetrieb-Ventilanordnung (16) einen Ventilblock (27) mit einem ersten Zulaufanschluss (29A), der mit der Hydraulikquelle (12) in Flüssigkeitsverbindung steht, einem zweiten Zulaufanschluss (30A), der mit einem der beiden Druckräume (22A, 22B) der Lenkeinrichtungs-Betätigungseinrichtung (22) in Flüssigkeitsverbindung steht, und einem Arbeitsanschluss (28A), der mit dem Druckraum (10A, 11A) der Bremseinrichtungs-Betätigungseinrichtung (10, 11) in Flüssigkeitsverbindung steht, aufweist, und in dem Ventilblock (27) ein den ersten Zulaufanschluss (29A) mit dem Arbeitsanschluss (28A) verbindenden erster Durchflussweg, der von einer ersten Absperrschraube (31) absperrbar ist, und ein den zweiten Zulaufanschluss (30A) mit dem Arbeitsanschluss verbindenden zweiter Durchflussweg, der von einer zweiten Absperrschraube (32) absperrbar ist, ausgebildet sind.

2. Selbstfahrende Baumaschine nach Anspruch 1, **dadurch gekennzeichnet, dass** die erste und/oder zweite Absperrschraube (31, 32) einen Schraubenkopf mit einem Mitnahmeprofil (31A, 32A), insbesondere einem Innenmehrkant, aufweisen.

3. Selbstfahrende Baumaschine nach Anspruch 2, **dadurch gekennzeichnet, dass** der Schraubenkopf der ersten und/oder zweiten Absperrschraube (31, 32) ein Außengewinde (31B, 32B) aufweist, wobei auf die erste und/oder zweite Absperrschraube (31, 32) eine Kontermutter (35) geschraubt ist.

4. Selbstfahrende Baumaschine nach einem der Ansprüche 1 bis 3, **dadurch gekennzeichnet, dass** die erste und zweite Absperrschraube (31, 32) in mit einem Innengewinde (33A, 34A) versehene Bohrungen (33, 34) des Ventilblocks (27) geschraubt sind.

5. Selbstfahrende Baumaschine nach einem der Ansprüche 1 bis 4, **dadurch gekennzeichnet, dass** die Lenkeinrichtungs-Betätigungseinrichtung (22) eine Kolben/Zylinder-Anordnung (22') mit einem doppelt wirkenden Hydraulikzylinder aufweist, wobei der zweite Zulaufanschluss (30A) der Notbetrieb-Ventilanordnung (16) mit einem der beiden Druckräume (22A, 22B) der Kolben/ZylinderAnordnung (22') in Flüssigkeitsverbindung steht.

6. Selbstfahrende Baumaschine nach Anspruch 5, **dadurch gekennzeichnet, dass** der zweite Zulaufanschluss (30A) der Notbetrieb-Ventilanordnung (8) mit einem der beiden Druckräume (22A, 22B) der Lenkeinrichtungs-Betätigungseinrichtung (22) über einen Durchflussweg verbunden ist, in dem ein Rückschlagventil (37) vorgesehen ist, das in Richtung des zweiten Zulaufanschlusses (30A) geöffnet ist.

7. Selbstfahrende Baumaschine nach einem der Ansprüche 1 bis 6 **dadurch gekennzeichnet, dass** das Hydrauliksystem ein Mehrwegeventil (15) mit einer ersten und einer zweiten Schaltstellung aufweist, wobei das Hydrauliksystem derart ausgebildet ist, dass der Druckraum (10A, 11A) der Bremseinrichtungs-Betätigungseinrichtung (10, 11) in der ersten Schaltstellung nicht mit Hydraulikflüssigkeit beaufschlagt wird, so dass das Laufwerk (3A, 3B) gebremst ist, und in der zweiten Schaltstellung mit Hydraulikflüssigkeit beaufschlagt wird, so dass das Laufwerk (3A, 3B) ungebremst ist, wobei das Mehrwegeventil (15) in die erste Schaltstellung vorgespannt ist.

8. Selbstfahrende Baumaschine nach Anspruch 8, **dadurch gekennzeichnet, dass** das Mehrwegeventil (15) ein elektromagnetisch gesteuertes Mehrwegeventil ist.

9. Selbstfahrende Baumaschine nach Anspruch 7 oder 8, **dadurch gekennzeichnet, dass** die Notbetrieb-Ventilanordnung (8) und das Mehrwegeventil (15) eine den Ventilblock (27) umfassende Baueinheit bilden.

10. Selbstfahrende Baumaschine nach einem der Ansprüche 1 bis 9, **dadurch gekennzeichnet, dass** die Hydraulikquelle (12) eine Hydraulikpumpe (13) mit einem Druckanschluss (13B) und einem Sauganschluss (13A) und einen Hydraulikflüssigkeitstank (14) umfasst, wobei der Sauganschluss (13A) der Hydraulikpumpe (13) mit dem Hydraulikflüssigkeitstank (14) in Flüssigkeitsverbindung steht.

11. Selbstfahrende Baumaschine nach Anspruch 10, **dadurch gekennzeichnet, dass** der Druckanschluss (13B) der Hydraulikpumpe (13) mit einem Zulauf (9A) der Lenkeinrichtung (9) und ein Ablauf (9B) der Lenkeinrichtung (9) mit dem Hydraulikflüssigkeitstank (14) in Flüssigkeitsverbindung steht.

12. Selbstfahrende Baumaschine nach Anspruch 10 oder 11, **dadurch gekennzeichnet, dass** das Mehrwegeventil (15) ein 3/2 Wegeventil mit einem Zulaufanschluss (15A) und einem Ablaufanschluss (15B) und einem Arbeitsanschluss (15C) ist, wobei der Zulaufanschluss (15A) des Mehrwegeventils (15) mit dem Druckanschluss (13B) der Hydraulikpumpe (13) und der Ablaufanschluss (15B) des Mehrwegeventils (15) mit dem Hydraulikflüssigkeitstank (14) und der Arbeitsanschluss (15C) des Mehrwegeventils (15) mit dem ersten Zulaufanschluss (29A) der Notbetrieb-Ventilanordnung (16) in Flüssigkeitsverbindung steht.

13. Selbstfahrende Baumaschine nach einem der Ansprüche 1 bis 12, **dadurch gekennzeichnet, dass** die selbstfahrende Baumaschine eine Straßenfräsmaschine mit einem in Arbeitsrichtung vorderen Laufwerk (3A), insbesondere einem vorderen Rad, und einem hinteren, linken Laufwerk, insbesondere Rad, und einem hinteren, rechten Laufwerk (3B), insbesondere Rad ist, wobei das vordere Laufwerk (3A) ein lenkbares Laufwerk ist, dem die Lenkeinrichtungs-Betätigungseinrichtung (22) zugeordnet ist.

14. Selbstfahrende Baumaschine nach Anspruch 13, **dadurch gekennzeichnet, dass** dem hinteren, linken Laufwerk, insbesondere Rad, eine erste Bremseinrichtungs-Betätigungseinrichtung (10) und dem hinteren, rechten Laufwerk (3B), insbesondere Rad, eine zweite Bremseinrichtungs-Betätigungseinrichtung (11) zugeordnet ist.

## Claims

1. Self-propelled construction machine, in particular a road milling machine, stabiliser, recycler or surface miner, comprising
a machine frame (1) which is supported by a chassis (2) comprising a plurality of running gears (3A, 3B),
a braking device (8) which comprises at least one hydraulically actuated braking device actuating device (10, 11) which has a pressure chamber (10A, 11A) that can be acted upon with a hydraulic fluid, wherein the braking device actuating device (10, 11) is formed in such a way that, in a locking position, in which the pressure chamber (10A, 11A) of the braking device actuating device (10, 11) is not acted upon with hydraulic fluid, the running gear (3A, 3B), to which the braking device actuating device (10, 11) is assigned, is braked, and, in an operating position, in which the pressure chamber (10A, 11A) of the braking device actuating device (10, 11) is acted upon with hydraulic fluid, the running gear (3A, 3B) is unbraked,
a hydrostatic steering device (9) which comprises at least one steering device actuating device (22) which has a first and a second pressure chamber (22A, 22B) that can be acted upon with a hydraulic fluid, wherein the steering device (9) is formed in such a way that, when steering in one direction, one pressure chamber (22A, 22B) of the steering device actuating device is acted upon with hydraulic fluid and, when steering in the other direction, the other pressure chamber (22A, 22B) of the steering device actuating device (22) is acted upon with hydraulic fluid, so that the running gear (3A, 3B) to which the steering device actuating device (22) is assigned executes a steering movement,
a hydraulic system for the actuation of the at least one braking device actuating device (10, 11) and the at least one steering device actuating device (22), which hydraulic system has a hydraulic source (12) for providing hydraulic fluid for supplying the steering device actuating device (22) and the braking device actuating device (10, 11) with hydraulic fluid, wherein the hydraulic system is formed such that, in the operating position, the pressure chamber (10A, 11A) of the braking device actuating device (10, 11) is acted upon with hydraulic fluid, wherein
the hydraulic system has a manually actuated emergency-operation valve arrangement (16) in the event of a malfunction in the supply of hydraulic fluid to the braking device actuating device (10, 11), which emergency-operation valve arrangement is formed in such a way that, after the manual actuation thereof, a fluid connection is created between the steering device actuating device (22) and the pressure chamber (10A, 11A) of the braking device actuating device (10, 11), so that, during the actuation of the steering device actuating device (22), hydraulic fluid flows from the steering device actuating device (22) into the pressure chamber (10A, 11A) of the braking device actuating device (10, 11), so that the braking device (8) assumes the operating position,
**characterised in that**
the emergency-operation valve arrangement (16) comprises a valve block (27) having a first inlet port (29A) which is in fluid connection with the hydraulic source (12), a second inlet port (30A) which is in fluid connection with one of the two pressure chambers (22A, 22B) of the steering device actuating device (22), and a work port (28A) which is in fluid connection with the pressure chamber (10A, 11A) of the braking device actuating device (10, 11), and in the valve block (27) a first flow path connecting the first inlet port (29A) to the work port (28A) is formed, which can be shut off by a first shut-off screw (31), and a second flow path connecting the second inlet port (30A) to the work port is formed, which can be shut off by a second shut-off screw (32).

2. Self-propelled construction machine according to claim 1, **characterised in that** the first and/or second shut-off screw (31, 32) have a screw head with a driving profile (31A, 32A), in particular a polygonal socket.

3. Self-propelled construction machine according to claim 2, **characterised in that** the screw head of the first and/or second shut-off screw (31, 32) has an external thread (31B, 32B), wherein a lock nut (35) is screwed on the first and/or second shut-off screws (31, 32).

4. Self-propelled construction machine according to any of claims 1 to 3, **characterised in that** the first and second shut-off screws (31, 32) are screwed into bores (33, 34) of the valve block (27) provided with an internal thread (33A, 34A).

5. Self-propelled construction machine according to any of claims 1 to 4, **characterised in that** the steering device actuating device (22) has a piston/cylinder arrangement (22') with a double-acting hydraulic cylinder, the second inlet port (30A) of the emergency-operation valve arrangement (16) being in fluid connection with one of the two pressure chambers (22A, 22B) of the piston/cylinder arrangement (22').

6. Self-propelled construction machine according to claim 5, **characterised in that** the second inlet port (30A) of the emergency-operation valve arrangement (8) is connected to one of the two pressure chambers (22A, 22B) of the steering device actuating device (22) via a flow path in which a nonreturn valve (37) is provided, which is opened in the direction of the second inlet port (30A).

7. Self-propelled construction machine according to any of claims 1 to 6, **characterised in that** the hydraulic system has a multi-way valve (15) with a first and a second switch position, the hydraulic system being formed in such a way that the pressure chamber (10A, 11A) of the braking device actuating device (10, 11) is not acted upon with hydraulic fluid in the first switch position, so that the running gear (3A, 3B) is braked, and is acted upon with hydraulic fluid in the second switch position so that the running gear (3A, 3B) is unbraked, wherein the multi-way valve (15) is preloaded into the first switch position.

8. Self-propelled construction machine according to claim 8, **characterised in that** the multi-way valve (15) is an electromagnetically controlled multi-way valve.

9. Self-propelled construction machine according to either claim 7 or claim 8, **characterised in that** the emergency-operation valve arrangement (8) and the multi-way valve (15) form a structural unit comprising the valve block (27).

10. Self-propelled construction machine according to any of claims 1 to 9, **characterised in that** the hydraulic source (12) comprises a hydraulic pump (13) having a pressure port (13B) and a suction port (13A) and a hydraulic fluid tank (14), wherein the suction port (13A) of the hydraulic pump (13) is in fluid connection with the hydraulic fluid tank (14).

11. Self-propelled construction machine according to claim 10, **characterised in that** the pressure port (13B) of the hydraulic pump (13) is in fluid connection with an inlet (9A) of the steering device (9) and an outlet (9B) of the steering device (9) is in fluid connection with the hydraulic fluid tank (14).

12. Self-propelled construction machine according to either claim 10 or claim 11, **characterised in that** the multi-way valve (15) can be a 3/2-way valve having an inlet port (15A) and an outlet port (15B) and a work port (15C), wherein the inlet port (15A) of the multi-way valve (15) is in fluid connection with the pressure port (13B) of the hydraulic pump (13), and the outlet port (15B) of the multi-way valve (15) is in fluid connection with the hydraulic fluid tank (14), and the work port (15C) of the multi-way valve (15) is in fluid connection with the first inlet port (29A) of the emergency-operation valve arrangement (16).

13. Self-propelled construction machine according to any of claims 1 to 12, **characterised in that** the self-propelled construction machine is a road milling machine having a front running gear (3A) in the working direction, in particular a front wheel, and a rear left running gear, in particular a wheel, and a rear right running gear (3B), in particular a wheel, wherein the front running gear (3A) is a steerable running gear to which the steering device actuating device (22) is assigned.

14. Self-propelled construction machine according to claim 13, **characterised in that** a first braking device actuating device (10) is assigned to the rear left running gear, in particular a wheel, and a second braking device actuating device (11) is assigned to the rear right running gear (3B), in particular a wheel.

## Revendications

1. Machine de construction automotrice, en particulier fraiseuse sur route, stabilisatrice, recycleuse ou mineuse de surface, présentant un bâti de machine (1) qui est porté par un châssis (2) qui comporte plusieurs organes de roulement (3A, 3B),
un dispositif de freinage (8) qui comporte au moins un dispositif d'actionnement de dispositif de freinage (10, 11) actionnable hydrauliquement qui présente une chambre de pression (10A, 11A) pouvant être alimenté en un liquide hydraulique, dans laquelle le dispositif d'actionnement de dispositif de freinage (10, 11) est réalisé de telle manière que dans une position de blocage, dans laquelle la chambre de pression (10A, 11A) du dispositif d'actionnement de dispositif de freinage (10, 11) n'est pas alimenté en liquide hydraulique, l'organe de roulement (3A, 3B), auquel est associé le dispositif d'actionnement de dispositif de freinage (10, 11), soit freiné, et dans une position de fonctionnement, dans laquelle la chambre de pression (10A, 11A) du dispositif d'actionnement de dispositif de freinage (10, 11) est alimenté en liquide hydraulique, l'organe de roulement (3A, 3B) ne soit pas freiné,
un dispositif de direction (9) hydrostatique qui comporte au moins un dispositif d'actionnement de dispositif de direction (22) qui présente une première et une seconde chambre de pression (22A, 22B) pouvant être alimentés en un liquide hydraulique, dans laquelle le dispositif de direction (9) est réalisé de telle manière que lors de la direction dans l'une direction l'une chambre de pression (22A, 22B) du dispositif d'actionnement de dispositif de direction et lors de la direction dans l'autre direction l'autre chambre de pression (22A, 22B) du dispositif d'actionnement de dispositif de direction (22) soient alimentés en liquide hydraulique de sorte que l'organe de roulement (3A, 3B), auquel est associé le dispositif d'actionnement de dispositif de direction (22), réalise un mouvement de direction,
un système hydraulique pour l'actionnement d'au moins un dispositif d'actionnement de dispositif de freinage (10, 11) et d'au moins un dispositif d'actionnement de dispositif de direction (22) qui présente une source hydraulique (12) pour la fourniture de liquide hydraulique pour l'alimentation du dispositif d'actionnement de dispositif de direction (22) et du dispositif d'actionnement de dispositif de freinage (10, 11) en liquide hydraulique, dans laquelle le système hydraulique est réalisé de telle manière que dans la position de fonctionnement la chambre de pression (10A, 11A) du dispositif d'actionnement de dispositif de freinage (10, 11) soit alimenté en liquide hydraulique,
dans laquelle
le système hydraulique présente un agencement de soupape de fonctionnement d'urgence (16) actionnable manuellement en cas de panne de l'alimentation du dispositif d'actionnement de dispositif de freinage (10, 11) en liquide hydraulique, qui est réalisé de telle manière qu'après son actionnement manuel, une liaison de liquide entre le dispositif d'actionnement de dispositif de direction (22) et la chambre de pression (10A, 11A) du dispositif d'actionnement de dispositif de freinage (10, 11) soit créée de sorte que lors d'un actionnement du dispositif d'actionnement de dispositif de direction (22), du liquide hydraulique s'écoule du dispositif d'actionnement de dispositif de direction (22) dans la chambre de pression (10A, 11A) du dispositif d'actionnement de dispositif de freinage (10, 11) de sorte que le dispositif de freinage (8) occupe la position de fonctionnement, **caractérisée en ce que**
l'agencement de soupape de fonctionnement d'urgence (16) présente un bloc de soupape (27) avec un premier raccord d'amenée (29A) qui est en liaison de liquide avec la source hydraulique (12), un second raccord d'amenée (30A), qui est en liaison de liquide avec un des deux espaces de pression (22A, 22B) du dispositif d'actionnement de dispositif de direction (22), et un raccord de travail (28A) qui est en liaison de liquide avec la chambre de pression (10A, 11A) du dispositif d'actionnement de dispositif de freinage (10, 11), et dans le bloc de soupape (27) sont réalisées une première voie de passage reliant le premier raccord d'amenée (29A) au raccord de travail (28A) qui peut être bloquée par une première vis de blocage (31), et une seconde voie de passage reliant le second raccord d'amenée (30A) au raccord de travail qui peut être bloquée par une seconde vis de blocage (32).

2. Machine de construction automotrice selon la revendication 1, **caractérisée en ce que** la première et/ou la seconde vis de blocage (31, 32) présentent une tête de vis avec un profil d'entraînement (31A, 32A), en particulier un polygone creux.

3. Machine de construction automotrice selon la revendication 2, **caractérisée en ce que** la tête de vis de la première et/ou la seconde vis de blocage (31, 32) présente un filet extérieur (31B, 32B), dans laquelle un contre-écrou (35) est vissé sur la première et/ou la seconde vis de blocage (31, 32).

4. Machine de construction automotrice selon l'une des revendications 1 à 3, **caractérisée en ce que** la première et la seconde vis de blocage (31, 32) sont vissées dans des perçages (33, 34) du bloc de soupape (27) pourvus d'un filet intérieur (33A, 34A).

5. Machine de construction automotrice selon l'une des revendications 1 à 4, **caractérisée en ce que** le dispositif d'actionnement de dispositif de direction (22) présente un agencement de piston et cylindre (22') avec un cylindre hydraulique à double action, dans laquelle le second raccord d'amenée (30A) de l'agencement de soupape de fonctionnement d'urgence (16) est en liaison de liquide avec un des deux espaces de pression (22A, 22B) de l'agencement de piston et cylindre (22').

6. Machine de construction automotrice selon la revendication 5, **caractérisée en ce que** le second raccord d'amenée (30A) de l'agencement de soupape de fonctionnement d'urgence (8) est relié à un des deux espaces de pression (22A, 22B) du dispositif d'actionnement de dispositif de direction (22) par le biais d'une voie de passage, dans laquelle un clapet antiretour (37) est prévu, lequel est ouvert en direction du second raccord d'amenée (30A).

7. Machine de construction automotrice selon l'une des revendications 1 à 6, **caractérisée en ce que** le système hydraulique présente une soupape à plusieurs voies (15) avec une première et une seconde position de commutation, dans laquelle le système hydraulique est réalisé de telle manière que la chambre de pression (10A, 11A) du dispositif d'actionnement de dispositif de freinage (10, 11) ne soit pas alimenté en liquide hydraulique dans la première position de commutation de sorte que l'organe de roulement (3A, 3B) soit freiné, et soit alimenté en liquide hydraulique dans la seconde position de commutation de sorte que l'organe de roulement (3A, 3B) ne soit pas freiné, dans laquelle la soupape à plusieurs voies (15) est précontrainte dans la première position de commutation.

8. Machine de construction automotrice selon la revendication 8, **caractérisée en ce que** la soupape à plusieurs voies (15) est une soupape à plusieurs voies commandée de manière électromagnétique.

9. Machine de construction automotrice selon la revendication 7 ou 8, **caractérisée en ce que** l'agencement de soupape de fonctionnement d'urgence (8) et la soupape à plusieurs voies (15) forment une unité de construction comprenant le bloc de soupape (27).

10. Machine de construction automotrice selon l'une des revendications 1 à 9, **caractérisée en ce que** la source hydraulique (12) comporte une pompe hydraulique (13) avec un raccord de pression (13B) et un raccord d'aspiration (13A) et un réservoir de liquide hydraulique (14), dans laquelle le raccord d'aspiration (13A) de la pompe hydraulique (13) est en liaison de liquide avec le réservoir de liquide hydraulique (14).

11. Machine de construction automotrice selon la revendication 10, **caractérisée en ce que** le raccord de pression (13B) de la pompe hydraulique (13) est en liaison de liquide avec une amenée (9A) du dispositif de direction (9) et une évacuation (9B) du dispositif de direction (9) avec le réservoir de liquide hydraulique (14).

12. Machine de construction automotrice selon la revendication 10 ou 11, **caractérisée en ce que** la soupape à plusieurs voies (15) est une soupape à 3/2 voies avec un raccord d'amenée (15A) et un raccord d'évacuation (15B) et un raccord de travail (15C), dans laquelle le raccord d'amenée (15A) de la soupape à plusieurs voies (15) est en liaison de liquide avec le raccord de pression (13B) de la pompe hydraulique (13) et le raccord d'évacuation (15B) de la soupape à plusieurs voies (15) avec le réservoir de liquide hydraulique (14) et le raccord de travail (15C) de la soupape à plusieurs voies (15) avec le premier raccord d'amenée (29A) de l'agencement de soupape de fonctionnement d'urgence (16).

13. Machine de construction automotrice selon l'une des revendications 1 à 12, **caractérisée en ce que** la machine de construction automotrice est une fraiseuse sur route avec un organe de roulement (3A) avant dans le sens de travail, en particulier une roue avant, et un organe de roulement gauche arrière, en particulier une roue, et un organe de roulement (3B) droit arrière, en particulier une roue, dans laquelle l'organe de roulement (3A) avant est un organe de roulement dirigeable, auquel est associé le dispositif d'actionnement de dispositif de direction (22).

14. Machine de construction automotrice selon la revendication 13, **caractérisée en ce qu'**un premier dispositif d'actionnement de dispositif de freinage (10) est associé à l'organe de roulement gauche arrière, en particulier la roue, et un second dispositif d'actionnement de dispositif de freinage (11) est associé à l'organe de roulement (3B) droit arrière, en particulier la roue.
